# EUROPEAN PATENT APPLICATION

(11) **EP 2 990 007 A1**
(43) Date of publication of application: **02.03.2016**
(21) Application number: 14787713.8
(22) Date of filing: 17.01.2014
(51) Int. Cl.: A61C 8/00, A61C 13/265, A61C 13/263

(54) **DENTAL IMPLANT**

(30) Priority: 26.04.2013 KR 20130046841; 24.07.2013 KR 20130087580
(71) Applicant: Kim, Hyeong Woo, Gyeonggi-do 463-898 (KR); Kim, Gyun Hwan, Goyang-si, Gyeonggi-do 411-730 (KR); Kim, Sun Young, Goyang-si, Gyeonggi-do 411-730 (KR)
(72) Inventor: Kim, Hyeong Woo, Gyeonggi-do 463-898 (KR); Kim, Gyun Hwan, Goyang-si, Gyeonggi-do 411-730 (KR); Kim, Sun Young, Goyang-si, Gyeonggi-do 411-730 (KR)
(74) Representative: Lermer, Christoph
(86) International application number: PCT/KR2014/000532
(87) International publication number: WO 2014/175539

(57) **Abstract**

The present invention relates to a dental implant, including: a fixture having a shaft hole in an upper portion thereof and implanted into a jawbone; and an abutment having a lower coupling shaft part and an upper mounting part, the lower coupling shaft part being inserted into the shaft hole of the fixture and being elastically coupled to the fixture, and the upper mounting part allowing a prosthesis to be mounted thereto, wherein the lower coupling shaft part of the abutment includes: a shock-absorbing part having at least two coupling legs with a cutout portion formed between the coupling legs; a coupling part formed on the outer surface of the shock-absorbing part; and a deformation control part projecting inwardly from the coupling legs and defining a width (d1) that is less than a width (d2) of the cutout portion inside the coupling part, thereby preventing the coupling shaft part from being excessively bent when an external force is applied to the coupling shaft part. According to the present invention, after implantation, the deformation control part prevents the coupling shaft from being excessively bent when an external force is applied to the coupling shaft part so that the deformation control part can significantly increase a clamping force of the coupling shaft within the shaft hole of the fixture, resulting in stable fixing of the coupling shaft. Further, the coupling shaft serves to sufficiently distribute the external force so that excessive force is not applied to the junction between the abutment and the coupling legs, thereby significantly improving the durability and lifespan of the implant.

## Description

### Technical Field

The present invention generally relates to dental implants that are connected with artificial teeth. More particularly, the present invention relates to a dental implant that is configured such that artificial teeth distribute external pressure in a lateral direction so that an external shock can be more effectively absorbed, a clamping force is increased so that the implant can be stably used, and durability and a lifespan of the implant are significantly expanded.

### Background Art

In dentistry, an implant means an artificial tooth substituting for a lost natural tooth or a dental procedure that is conducted in such a manner that a fixture is implanted into a jawbone to be fused with the jawbone for a predetermined period, and prostheses such as a coupling member, artificial teeth, and the like are then fixed thereon so that the original functions of teeth can be recovered.

In the case of an implant that is generally used, a fixture implanted into a jawbone is coupled to a coupling part of an abutment in an upper shaft hole of the fixture using a screw coupling method.

However, such a conventional screw coupling method is problematic in that screw loosening, screw fracture or the like is caused and the aesthetic impression of prostheses is reduced because coupling of the fixture corresponding to a lower structure and the abutment corresponding to an upper structure is completely dependent upon screw coupling.

In order to solve this problem, Korean Patent No. 10-0668368 entitled "dental implant" provides, as shown in FIG. 1, a dental implant 1 including: a fixture 10 having a shaft hole 12 in an upper portion thereof and implanted into a jawbone; and an abutment 20 having coupling legs 22 of a shape memory alloy inserted into the shaft hole 12 in a lower portion thereof and coupled to the fixture 10 via the coupling legs so that the teeth can be used to chew food.

Such a conventional dental implant 1 is configured such that the coupling hole 14 of the fixture 10 and the coupling protrusion 24 of the abutment 20 are complementarily coupled to each other in pair-bonding so that a screw loosening phenomenon or a screw fracture phenomenon can be prevented from occurring, and the aesthetic impression of prostheses can be secured.

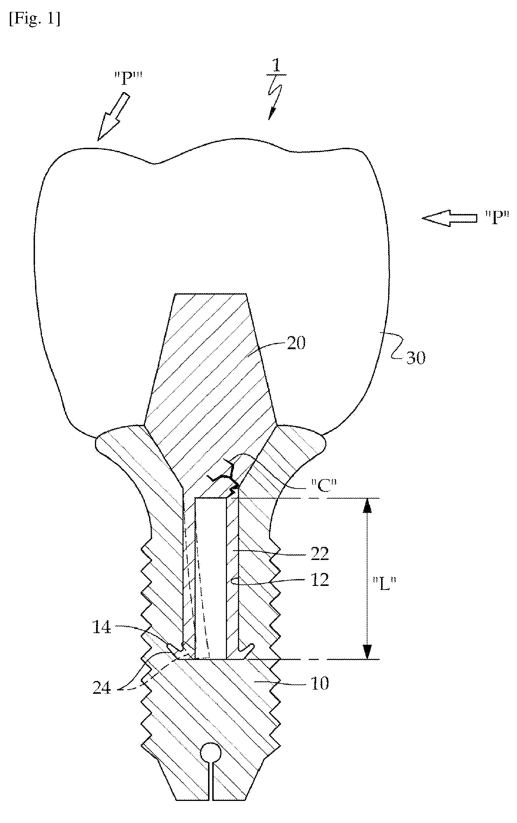

However, in this conventional dental implant 1, as shown in FIG. 1, when an occlusal force causing external pressure P or P' in a transverse direction or a lateral direction via a prosthesis 30 and the like from the outside is applied to the implant, stress is not entirely distributed to the coupling shaft of the abutment so that excessive stress is repeatedly concentrated in a junction C of the coupling legs 22 extending from the abutment 20, the coupling legs being opposite to a portion to which lateral pressure is applied, thereby causing a crack or fracture in the coupling legs, or occasionally causing a circumstance in which the coupling legs 22 are separated from the fixture 10. Furthermore, excessive stress is generated from a portion of the fixture, thereby promoting breaking of the alveolar bone located at a portion coupled to the fixture.

In other words, in order for the coupling legs 22 of the shape memory alloy to be elastically coupled to the fixture 10, a thickness of the coupling and a thickness of the coupling legs cannot be produced indefinitely thick. Thus, when external pressure in a lateral direction is applied to the implant 1, a crack in a junction C between the coupling legs 22 of the abutment 20 is rapidly generated due to an excessive fatigue load repeated at the coupling legs that are opposite to a portion to which lateral pressure is applied. As a result, it is problematic in that the abutment 20 is ruptured and separated from the fixture 10 so that durability and a lifespan of the implant are reduced. Due to the continuous external pressure in the lateral direction, the coupling part of the coupling legs is occasionally separated from the coupling part of the fixture.

Further, when strong external pressure P in a lateral direction is applied to the prosthesis 30, the coupling legs 22, which are configured such that cutout portions are entirely open downwardly at a regular distance, have a limit in absorbing shock.

The problems are caused by a unique coupling structure of the conventional the coupling legs 22. In other words, the coupling protrusion 24 of the conventional abutment 20 is configured such that, as shown in FIG. 1, at a lower portion of the coupling legs 22, the coupling protrusion is coupled to the coupling hole 14 of the fixture 10. In such a conventional structure, the coupling protrusion 24 arranged on a coupling shaft of the abutment 20 is positioned at a location corresponding to a long length L from the junction C between the abutment 20 and the coupling legs 22.

Accordingly, the conventional coupling legs 22 having a limited thickness have flexibility due to a cantilever structure in which the coupling protrusion 24 arranged at the coupling shaft of the abutment 20 has a long length L from the junction C between the abutment and the coupling legs 22. Even though it is advantageous in that this flexibility enables the coupling protrusion 24 located at the coupling legs of the abutment 20 to be easily coupled to the coupling hole 14 of the fixture 10, it is disadvantageous in that the flexibility does not enable stable resistance against an external force when the coupling protrusion and the coupling legs are mounted in reverse so that the external force cannot be effectively uniformly dispersed over the entire inner surface of the fixture, and the flexibility enables stress to be concentrated in the junction C connected to the coupling shaft from an upper portion of the abutment so that the coupling legs are easily separated from the fixture.

In other words, such a conventional structure cannot continuously secure a stable clamping force between the fixture 10 and the abutment 20.

Further, such a conventional structure is problematic in that since the coupling legs 22 are configured to be independently separated from each other rather than being adjacent to each other, when an external force is applied to the coupling legs, stress transfer or dispersion is not caused between the coupling legs 22, and the external force is directly transmitted to a coupling portion between the coupling protrusion 24 of the abutment 20 and the coupling hole 14 of the fixture 10, and high stress is applied to the junction C between the abutment 20 and the coupling legs 22.

Consequently, this conventional structure is problematic in that a large external force P is continuously applied to the junction C of the coupling legs 22 so that the junction of the coupling legs is structurally vulnerable and a crack or fracture in the junction is occasionally caused.

### Disclosure

### Technical Problem

Accordingly, the present invention has been made keeping in mind the above problems occurring in the related art, and the present invention is intended to propose a dental implant that is configured such that the structure of a coupling shaft part adopted to couple an abutment to a fixture is reinforced so that the implant can be firmly supported by an occlusal force applied thereto, and external pressure can be more effectively distributed over the entire surface of the fixture, thereby maximizing a shock absorbing effect and preventing stress from being concentrated in a specific portion.

Another object of the present invention is to provide a dental implant that is configured such that a clamping force of an abutment to a fixture is largely increased after an implant procedure has been completed so that the abutment can be stably fixed to the fixture, thereby significantly improving durability and a lifespan of the implant.

### Technical Solution

In order to achieve the above object, according to one aspect of the present invention, there is provided a dental implant, comprising: a fixture having a shaft hole in an upper portion thereof and implanted into a jawbone; and an abutment having a lower coupling shaft part and an upper mounting part, the lower coupling shaft part being inserted into the shaft hole of the fixture and being elastically coupled to the fixture, and the upper mounting part allowing a prosthesis to be mounted thereto, wherein the lower coupling shaft part of the abutment includes:
a shock-absorbing part having at least two coupling legs with a cutout portion formed between the coupling legs;
a coupling part formed on an outer surface of the shock-absorbing part; and
a deformation control part projecting inwardly from the coupling legs and defining a width d1 that is less than a width d2 of the cutout portion inside the coupling part, thereby preventing the coupling shaft part from being excessively bent when an external force is applied to the coupling shaft part.

According to another aspect of the present invention, there is provided a dental implant, comprising: a fixture having a shaft hole in an upper portion thereof and implanted into a jawbone; and an abutment having a lower coupling shaft part and an upper mounting part, the lower coupling shaft part being inserted into the shaft hole of the fixture and being elastically coupled to the fixture, and the upper mounting part allowing a prosthesis to be mounted thereto, wherein the lower coupling shaft part of the abutment includes:
a shock-absorbing part having at least two coupling legs with a first cutout portion formed between the coupling legs;
a coupling part formed on an outer surface of the shock-absorbing part; and
a deformation control part having a second cutout portion formed at a location above the first cutout portion, the second cutout portion being formed in such a manner that a width (d1) of the second cutout portion is less than a width (d2) of the first cutout portion, thereby preventing the coupling shaft part from being excessively bent when an external force is applied to the coupling shaft part.

Preferably, the coupling part comprises a coupling hole or a coupling protrusion that is formed on a predetermined position of the outer surface of the shock-absorbing part, and a coupling protrusion or a coupling hole corresponding to the coupling hole or to the coupling protrusion of the coupling part, respectively, is formed on an inner surface of the shaft hole of the fixture to which the coupling shaft part is coupled, so that when the coupling shaft part is coupled to the shaft hole of the fixture, the coupling shaft part and the fixture are elastically coupled together.

More preferably, the coupling part is formed on a lower portion of the coupling shaft part, and the deformation control part is formed on an upper portion of the coupling part.

Preferably, the deformation control part is formed on a lower portion of the coupling shaft part, and the coupling part is formed on an upper portion of the deformation control part.

Preferably, the coupling part is formed on a middle portion of the coupling shaft part, and the deformation control part is formed on each of upper and lower portions of the coupling part.

Most preferably, the width d2 of the cutout portion inside the coupling part ranges from 0.45 mm to 1.0 mm, and the width d1 of the deformation control part is less than 0.1 mm.

Preferably, the cutout portion of the coupling shaft part is configured to form a rectangular shape, a circular shape, an elliptical shape, or a polygonal shape.

More preferably, the coupling shaft part is configured to form a taper shape, with a cross-sectional area of the coupling shaft part being reduced in a direction from an upper end to a lower end of the coupling shaft part, and the shaft hole of the fixture is configured to form an inner circumferential surface having a taper shape corresponding to the taper shape of the coupling shaft part so that the coupling shaft part is easily inserted into the shaft hole of the fixture.

### Advantageous Effects

According to the present invention having the above-described characteristics, a dental implant includes: a shock-absorbing part having at least two coupling legs and including a cutout portion in an inner portion thereof, the shock-absorbing part being formed in a lower coupling shaft part of an abutment; a coupling part having a coupling protrusion, a coupling hole or a coupling step, the coupling part being formed on an outer surface of the shock-absorbing part; and a deformation control part including protrusions formed toward an inner side of a cutout portion so that the coupling shaft part can be prevented from being excessively bent when an external force is applied to a portion of the shock-absorbing part, thereby realizing a structure in which when lateral pressure beyond a predetermined level is applied, protrusions of the deformation control part come into contact with each other so that an occlusal force can be entirely uniformly dispersed on an inner surface of the fixture, and the coupling shaft part of the abutment is more flexibly reinforced.

Thus, according to the present invention, when external pressure is applied to an upper mounting part of an abutment to which an implant prosthesis is mounted, and is then transmitted to the coupling shaft part of the abutment, the protrusions of the deformation control part come into contact with each other so that the external pressure is distributed over the entire surface of the coupling shaft part, and a shock absorbing effect is maximized, whereby the implant can effectively disperse stress against the external pressure and can be firmly supported.

Further, according to the present invention, after implantation, the deformation control part prevents the coupling shaft from being excessively bent when an external force is applied to the coupling shaft part so that the deformation control part can significantly increase the clamping force of the coupling shaft within the shaft hole of the fixture, resulting in stable fixing of the coupling shaft. Further, the coupling shaft serves to sufficiently distribute the external force so that an excessive force is not applied to the junction between the abutment and the coupling legs, thereby significantly improving the durability and lifespan of the implant.

### Description of Drawings

FIG. 1 is a view illustrating a problem experienced in coupling legs having a conventional structure, in which movement of the coupling legs and cracks in the coupling legs are caused by an external force applied to the coupling legs so that durability is deteriorated;
FIG. 2 is an exploded perspective view showing the dental implant according to the present invention;
FIG. 3a to FIG. 3c are cross sectional views illustrating various structures of a cutout portion of a shock-absorbing part provided in the dental implant according to the present invention;
FIG. 4a is a cross sectional view illustrating a structure of the dental implant according to the present invention in which coupling protrusions are convexly formed in a ring-like shape on an outer surface of coupling legs of a coupling shaft part of an abutment so as to be coupled to each other;
FIG. 4b is a coupled cross sectional view of the dental implant according to the present invention illustrated in FIG. 4a;
FIG. 5a is a cross sectional view illustrating a structure of the dental implant according to the present invention in which a coupling hole is concavely formed in a ring-like shape on the outer surface of the coupling legs arranged at the coupling shaft part of the abutment, and a coupling protrusion is convexly formed on an inner surface of the shaft hole of a fixture so that the coupling hole and the coupling protrusion are coupled to each other;
FIG. 5b is a coupled cross sectional view of the dental implant according to the present invention illustrated in FIG. 5a;
FIG. 6 is a coupled cross sectional view illustrating a changed structure of the dental implant according to the present invention, namely, a structure in which the coupling part having the coupling hole or the coupling protrusion is formed on a middle portion of the coupling shaft, and first and second protrusions of the deformation control part are formed;
FIG. 7 is a coupled cross sectional view illustrating another changed structure of the dental implant according to the present invention in which the coupling part having the coupling hole or the coupling protrusion is formed on a lower outer surface of the coupling shaft, and the deformation control part is formed on the middle portion of the coupling shaft; and
FIG. 8 is a coupled cross sectional view illustrating a further changed structure of the dental implant according to the present invention.

### Mode for Invention

Reference will now be made in greater detail to an exemplary embodiment of the present invention with reference to the accompanying drawings. First, with regard to the terms used in this specification, a coupling shaft part 122 is formed at a lower portion of an abutment and is inserted into a shaft hole of a fixture, thereby meaning that the coupling shaft part has an entire coupling shaft for coupling the abutment and the fixture; a shock-absorbing part 130 means a part capable of absorbing a shock by forming a cutout portion 132 in an inner portion of the coupling shaft part 122 having at least two coupling legs; a coupling part is formed on an outer surface of the shock-absorbing part, thereby meaning that the coupling part has a coupling protrusion 150 or a coupling hole 152 directly coupled to the corresponding coupling part of the fixture.

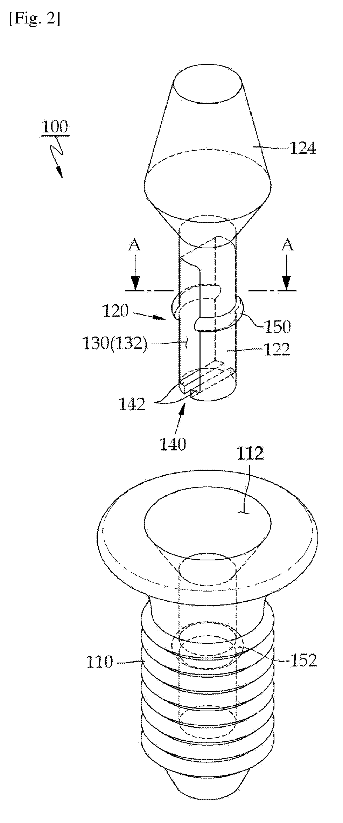

As entirely shown in FIG. 2, a dental implant 100 according to the present invention includes: a fixture 110 having a shaft hole 112 in an upper portion thereof and implanted into a jawbone; and an abutment 120 having a lower coupling shaft part 122 and an upper mounting part 124, the lower coupling shaft part being inserted into the shaft hole 112 of the fixture 110 and being elastically coupled to the fixture 110, and the upper mounting part allowing a prosthesis to be mounted thereto.

Furthermore, the dental implant 100 according to the present invention is configured such that the lower coupling shaft part 122 of the abutment 120 includes a shock-absorbing part 130 having at least two coupling legs with at least one cutout portion 132 having one open side in an inner portion thereof.

The cutout portion 132 of the shock-absorbing part 130 may be formed in, for example, a quadrangular shape, a circular shape, an elliptical shape, or a polygonal shape. Preferably, the cutout portion may be formed in a quadrangular-shaped cross section that can be easily manufactured.

Also, the shock-absorbing part 130 has at least two coupling legs with at least one cutout portion 132 formed between the coupling legs.

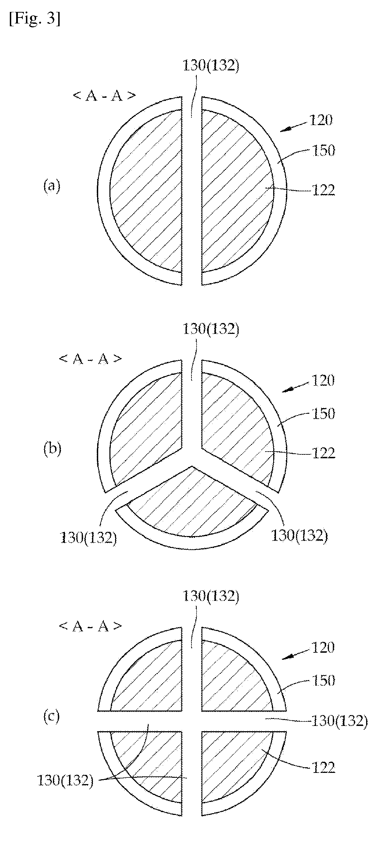

In other words, the cutout portion 132 of the shock-absorbing part 130 may be a cross section that is straightly divided into two portions as shown in FIG. 3a as a cross sectional view taken along A-A of FIG. 2, a cross section that is divided into three portions as shown in FIG. 3b, or a cross section that is divided into four portions crosswise as shown in FIG. 3c.

As such, the abutment 120 provided in the present invention is entirely made of, preferably, a shape memory alloy, or it is preferable that the coupling shaft part 122 of at least the abutment 120 be partially made of the shape memory alloy.

Further, the entire abutment 120 or the coupling shaft part 122 may be made of a material such as carbon fiber reinforced plastic having similar elasticity and strength to those of the shape memory alloy.

In other words, the shape memory alloy used in the abutment 120 is an alloy material that is typically known to the relevant business field, and means an alloy that is a kind of self-restoring structure material having a property in which a desired shape is remembered and is then restored at a suitable temperature. Examples of the shape memory alloy include a Ti-Ni based alloy, a Cu-Zn-Al based alloy, a Co-Ti-Ni based alloy, and the like.

Furthermore, the dental implant 100 according to the present invention has the deformation control part 140 including protrusions 142 inwardly formed from the cutout portion, thereby preventing the coupling shaft part from being excessively bent due to an external force applied to the coupling shaft part.

The protrusions 142 of the deformation control part 140 are formed to project inwardly from the coupling legs and are configured such that a width d1 between the protrusions is less than a width d2 of the cutout portion 132 inside the coupling part having the coupling hole or the coupling protrusion.

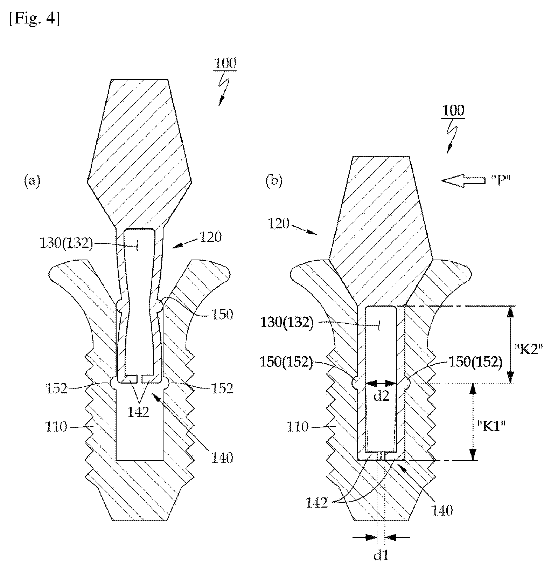

As shown in FIGS. 4a and 4b, the coupling shaft part 122 is configured such that the coupling protrusion 150 formed on the outer surface of the shock-absorbing part 130 is formed on a middle portion of the coupling shaft part 122, and the protrusions 142 of the deformation control part 140 are inwardly formed from the cutout portion 132 at a lower portion of the coupling shaft part 122.

In such a structure, it is preferable that the width d2 of the cutout portion 132 having the coupling protrusion or the coupling hole ranges from 0.45 mm to 1.0 mm, and it is preferable that the width d1 between the protrusions of the deformation control part 140 be less than 0.1 mm.

In such a structure of the present invention, a distance K1 between the coupling part 140 having the coupling protrusion or the coupling hole, and the protrusions 142 of the deformation control part 140 or a distance K2 between the coupling part and a junction C between the abutment and the coupling legs is remarkably short compared to a long length L between the coupling protrusion 24 of the abutment 20 and the junction C between the abutment and the coupling legs 22 in the structure of the conventional art (K1<L, K2<L).

Accordingly, this structure is effective in providing the coupling legs having a short length compared to that of the conventional structure. Thanks to such a structure, as shown in FIG. 4a, when the coupling shaft part 122 of the abutment 120 is coupled to the fixture 110, deformation of the coupling shaft part 122 is minimized so that the coupling shaft part 122 of the abutment 120 can be stably coupled to the shaft hole 112 of the fixture 110. As shown in FIG. 4b, in a state where the coupling shaft part 122 of the abutment 120 is coupled to the fixture 110, deformation of the coupling shaft part 122 is largely controlled even when external pressure P is applied to the abutment 120.

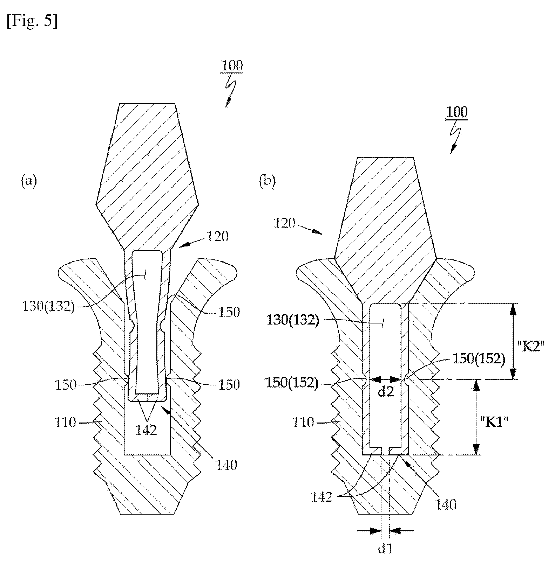

Meanwhile, the dental implant 100 according to the present invention may be configured such that as shown in FIG. 5a and FIG. 5b, the coupling hole 152 instead of the coupling protrusion 150 is formed on the outer surface of the coupling shaft part 122, and the coupling protrusion 150 is formed on an inner surface of the shaft hole 112 of the fixture 110 to which the coupling shaft part 122 is coupled so that the coupling shaft part 122 and the fixture 110 can be elastically coupled to each other when the coupling shaft part 122 is inserted into the shaft hole 112.

In the dental implant 100 according to the present invention configured as described above, as shown in FIG. 4a, when the coupling shaft part 122 of the abutment 120 is inserted into the shaft hole 112 of the fixture 110, the outer surface of the coupling shaft part 122 of the abutment 120 is inwardly bent by the coupling protrusion 150 provided in the coupling shaft part 122, the cutout portion 132 of the shock-absorbing part provides a clearance that enables the coupling shaft part 122 to be inwardly bent.

In such a state, when the coupling protrusion 150 of the coupling shaft part 122 is matched with the coupling hole 152 of the shaft hole 112, as shown in FIG. 4b, the coupling protrusion 150 and the coupling hole 152 are coupled to each other due to an elastic restoring force of the coupling shaft part 122 so that stable coupling between the abutment 120 and the fixture 110 can be implemented.

In this state, when an external force or an external impulsive force is applied to the implant 100, the external force or external pressure P is transmitted to the coupling shaft part 122 of the abutment 120. Due to the external force of external pressure P, when the coupling shaft part 122 of the abutment 120 is bent, thereby causing deformation, the protrusions 142 of the deformation control part 140, which are located to be adjacent to each other, are immediately supported to come into contact with each other so that the external force or external pressure P is transmitted to a gap between the protrusions 142 in contact with each other and is then dispersed over the entire surface of the coupling shaft part 122.

Accordingly, the high external pressure P applied to the implant 100 is prevented from being concentrated in a specific portion of the coupling shaft part 122 of the abutment 120, and a shock absorbing effect is maximized so that the implant 100 can be firmly supported.

Furthermore, according to the present invention, in this process, the deformation control part 140 servers to prevent the coupling shaft part 122 from being excessively bent. This is because the present invention provides a structure in which the distance K1 between the coupling part 140 having the coupling protrusion or the coupling hole and the protrusions 142 of the deformation control part 140, or the distance K2 between the coupling part and the junction C between the abutment and the coupling legs is remarkably short compared to a long length L between the coupling protrusion 24 of the abutment 20 and the connection portion C of the abutment and the coupling legs 22 in the conventional structure.

In the structure having such a short length K1 or K2, the protrusions 142 of the deformation control part 140 are supported to come into contact with each other, thereby controlling excessive deformation of the coupling shaft part 122 by an external force so that the deformation control part can significantly increase a clamping force of the coupling shaft part 122 within the shaft hole 112 of the fixture 110, resulting in stable fixing of the coupling shaft.

Such a support structure of the present invention is also equally applied to a structure as shown in FIGS. 5a and 5b in which the coupling hole 152 is formed on the outer surface of the coupling shaft part 122, and the coupling protrusion 150 is formed on an inner circumferential surface of the shaft hole 112 of the fixture 110.

More preferably, the coupling shaft part 122 is configured to form a taper shape, with a cross-sectional area of the coupling shaft part being reduced in a direction from an upper end to a lower end of the coupling shaft part, and the shaft hole 112 of the fixture 110 is configured to form an inner circumferential surface having a taper shape corresponding to the taper shape of the coupling shaft part 122 so that the coupling shaft part is easily inserted into the shaft hole of the fixture.

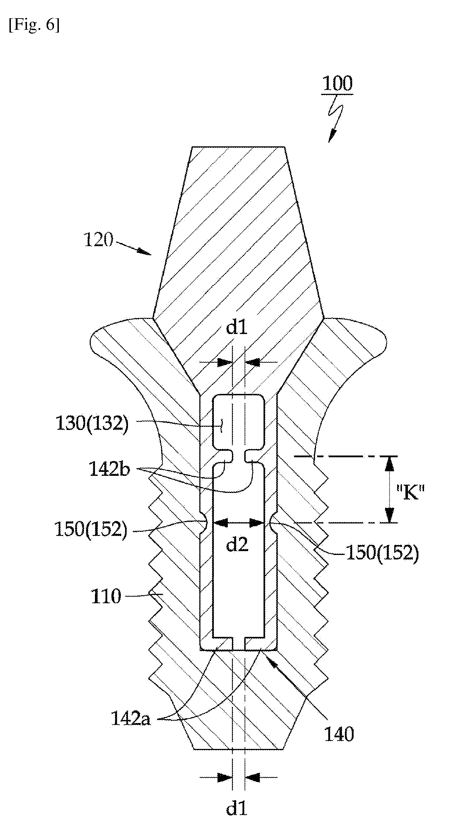

FIG. 6 illustrates a changed structure of the present invention.

In such a changed structure, the coupling part formed on the outer surface of the coupling shaft part 122, namely, the coupling hole 152 or the coupling protrusion 150, is formed on a middle portion of the coupling shaft part 122, and the deformation control part 140 is configured to form first protrusions 142a inwardly from the cutout portion 132 at a lower portion of the coupling part 150, 152, and to form second protrusions 142b inwardly from the cutout portion 132 at an upper portion of the coupling part 150, 152.

Even in this structure, according to the present invention, the first and second protrusions 142a and 142b of the deformation control part 140 are supported to come into contact with each other, thereby controlling excessive deformation of the coupling shaft part 122 by an external force, and as a result, external pressure P applied to the implant 100 is transmitted to a gap between the first and second protrusions 142a and 142b in contact with each other and is then dispersed over the entire surface of the coupling shaft part 122.

Here, the width d1 between the first protrusions 142a may be equally applied to the width d1 between the second protrusions 142b. Accordingly, through such a changed structure, a clamping force of the coupling shaft part 122 is significantly increased within the shaft hole 112 of the fixture 110, thereby enabling stable fixing of the coupling shaft. Further, the width between the first protrusions 142a and the width between the second protrusions 142b may be also differently applied.

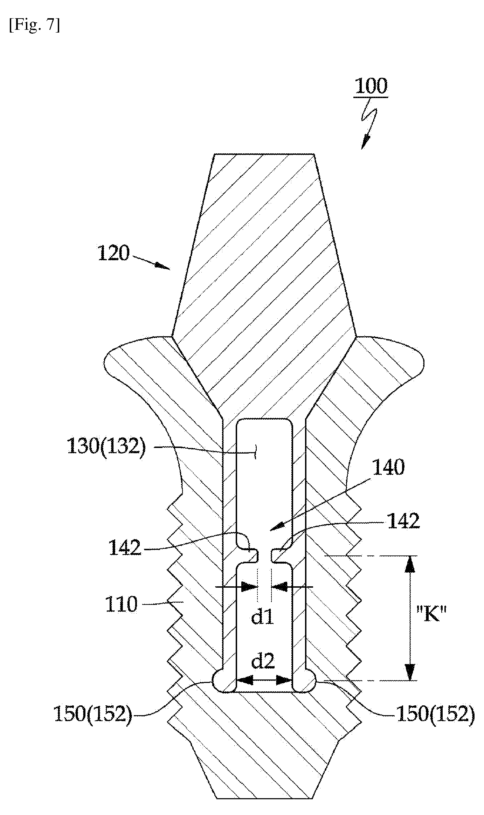

FIG. 7 illustrates another changed structure of the present invention.

In such a structure, according to the present invention, the coupling hole 152 or the coupling protrusion 150 formed on the outer surface of the coupling shaft part 122 is formed on a lower outer surface of the coupling shaft part 122 as the conventional structure, and the deformation control part 140 is configured to form the protrusions 142 from the middle portion of the coupling shaft part 122 to the inner side of the cutout portion 132.

In this structure, a length K between the coupling protrusion 150 of the coupling shaft part 122 and the protrusions 142 of the deformation control part 140 is also remarkably short compared to the long length L between the coupling protrusion 24 of the abutment 120 and the junction C between the abutment 120 and the coupling legs 22. Due to this, when external pressure is applied, the protrusions 142 of the deformation control part 140 are supported to come into contact with each other, thereby controlling excessive deformation of the coupling shaft part 122 by an external force. As a result, the deformation control part 140 can significantly increase a clamping force of the coupling shaft part 122 within the shaft hole 112 of the fixture 110, resulting in stable fixing of the coupling shaft.

In such a structure of the present invention, when external pressure P applied to the implant is transmitted via the coupling shaft part 122 of the abutment 120, the protrusions 142 of the deformation control part 140, which are spaced apart from each other by the narrower width d1 than the long length, come into contact with each other even by small deformation of the coupling shaft part 122 so that the external force or external pressure P is dispersed over the entire surface of the coupling shaft part 122, thereby being preventing from being concentrated in a specific portion.

Accordingly, this structure serves to largely control deformation of the coupling shaft part 122 by an external force, and as a result, a clamping force of the coupling shaft part 122 is significantly increased within the shaft hole 112 of the fixture 110, thereby enabling stable fixation. Further, durability of the implant 100 can be improved and a lifespan of the implant can be largely expanded.

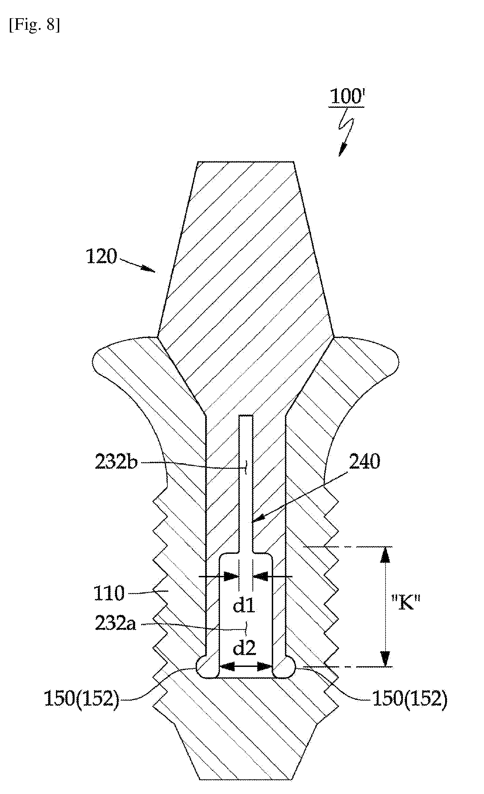

Meanwhile, FIG. 8 illustrates a further changed structure of the present invention.

As shown in FIG. 8, according to another embodiment of the present invention, a second cutout portion 232b is formed at a location above a first cutout portion 232a formed in the lower coupling shaft part of the abutment, and the deformation control part 240 is provided in such a manner that a width d1 of the second cutout portion is less than a width d2 of the first cutout portion, thereby preventing the coupling shaft part from being excessively bent when an external force is applied to the coupling shaft part.

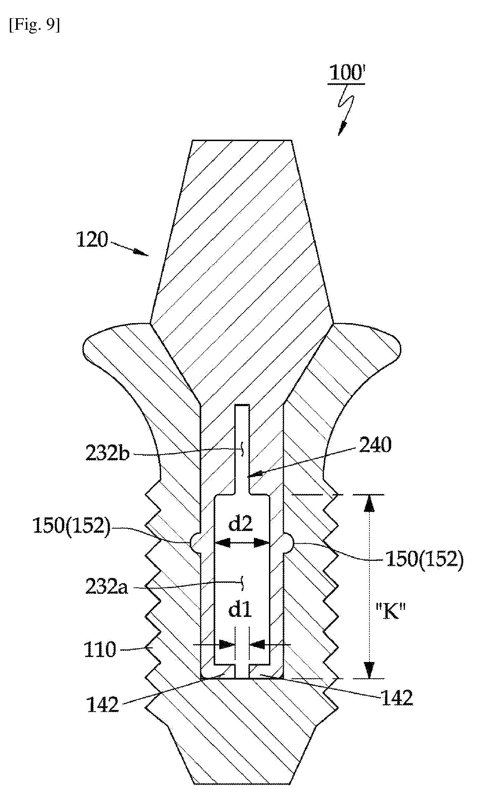

Further, FIG. 9 illustrates yet another changed structure of the present invention.

As shown in FIG. 9, according to still another embodiment of the present invention, the second cutout portion 232b is formed at a location above the first cutout portion 232a formed in the lower coupling shaft part of the abutment; the deformation control part 240 is provided in such a manner that the width d1 of the second cutout portion is less than the width d2 of the first cutout portion; and the protrusions 142 are formed inwardly from the first cutout portion 232a at an end of the coupling legs, thereby controlling the coupling shaft part from being excessively bent when an external force is applied to the coupling shaft part.

Although the specific embodiments of the present invention have been disclosed for illustrative purposes with reference to the drawings, the present invention should not be limited to specific structures of the embodiments. Those skilled in the art will appreciate that various modifications, additions and substitutions are possible, without departing from the scope and spirit of the invention as disclosed in the accompanying claims. For example, the width d2 of the cutout portion 132 of the shock-absorbing part 130 and the width d1 between the protrusions 132 of the deformation control part 140 may be changed within the numerical range indicated according to the material properties of the coupling shaft part 122. All of the simply modified or changed structures may be clearly included within the scope of rights of the present invention.

## Claims

1. A dental implant, comprising: a fixture having a shaft hole in an upper portion thereof and implanted into a jawbone; and an abutment having a lower coupling shaft part and an upper mounting part, the lower coupling shaft part being inserted into the shaft hole of the fixture and being elastically coupled to the fixture, and the upper mounting part allowing a prosthesis to be mounted thereto, wherein the lower coupling shaft part of the abutment includes:
a shock-absorbing part having at least two coupling legs with a cutout portion formed between the coupling legs;
a coupling part formed on an outer surface of the shock-absorbing part; and
a deformation control part projecting inwardly from the coupling legs and defining a width (d1) that is less than a width (d2) of the cutout portion inside the coupling part, thereby preventing the coupling shaft part from being excessively bent when an external force is applied to the coupling shaft part.

2. A dental implant, comprising: a fixture having a shaft hole in an upper portion thereof and implanted into a jawbone; and an abutment having a lower coupling shaft part and an upper mounting part, the lower coupling shaft part being inserted into the shaft hole of the fixture and being elastically coupled to the fixture, and the upper mounting part allowing a prosthesis to be mounted thereto, wherein the lower coupling shaft part of the abutment includes:
a shock-absorbing part having at least two coupling legs with a first cutout portion formed between the coupling legs;
a coupling part formed on an outer surface of the shock-absorbing part; and
a deformation control part having a second cutout portion formed at a location above the first cutout portion, the second cutout portion being formed in such a manner that a width (d1) of the second cutout portion is less than a width (d2) of the first cutout portion, thereby preventing the coupling shaft part from being excessively bent when an external force is applied to the coupling shaft part.

3. The dental implant of claim 1 or 2, wherein the coupling part comprises a coupling hole or a coupling protrusion that is formed on a predetermined position of the outer surface of the shock-absorbing part, and a coupling protrusion or a coupling hole corresponding to the coupling hole or to the coupling protrusion of the coupling part, respectively, is formed on an inner surface of the shaft hole of the fixture to which the coupling shaft part is coupled, so that when the coupling shaft part is coupled to the shaft hole of the fixture, the coupling shaft part and the fixture are elastically coupled together.

4. The dental implant of claim 1 or 2, wherein the coupling part is formed on a lower portion of the coupling shaft part, and the deformation control part is formed on an upper portion of the coupling part.

5. The dental implant of claim 1 or 2, wherein the deformation control part is formed on a lower portion of the coupling shaft part, and the coupling part is formed on an upper portion of the deformation control part.

6. The dental implant of claim 1 or 2, wherein the coupling part is formed on a middle portion of the coupling shaft part, and the deformation control part is formed on each of upper and lower portions of the coupling part.

7. The dental implant of claim 1 or 2, wherein the cutout portion of the coupling shaft part is configured to form a rectangular shape, a circular shape, an elliptical shape, or a polygonal shape.

8. The dental implant of claim 1 or 2, wherein the coupling shaft part is configured to form a taper shape, with a cross-sectional area of the coupling shaft part being reduced in a direction from an upper end to a lower end of the coupling shaft part, and the shaft hole of the fixture is configured to form an inner circumferential surface having a taper shape corresponding to the taper shape of the coupling shaft part so that the coupling shaft part is easily inserted into the shaft hole of the fixture.
